# EUROPEAN PATENT APPLICATION

(11) **EP 4 379 881 A1**
(43) Date of publication of application: **05.06.2024**
(21) Application number: 23212594.8
(22) Date of filing: 28.11.2023
(51) Int. Cl.: H01M 10/04, H01M 50/107, H01M 50/528, H01M 50/531, H01M 50/548, H01M 10/0587

(54) **SECONDARY BATTERY**

(30) Priority: 01.12.2022 KR 20220165653
(71) Applicant: Samsung SDI Co., Ltd., Yongin-si, Gyeonggi-do 17084 (KR)
(72) Inventor: Du, Jae Gyun, 17084 Yongin-si, Gyeonggi-do, (KR); Jung, Won Il, 17084 Yongin-si, Gyeonggi-do, (KR)
(74) Representative: Gulde & Partner

(57) **Abstract**

A secondary battery (10) including an electrode assembly (100, 100A, 100B, 100C) including a positive electrode plate (110) having a positive electrode uncoated portion (114, 115), a negative electrode plate (120, 220, 320, 420) having a negative electrode uncoated portion (124, 125, 224, 225, 324, 325, 424, 425), and a separator (130) between the positive electrode plate (110) and the negative electrode plate (120, 220, 320, 420), a case (200) including a side plate (210) with a cylindrical body, the case (200) accommodating the electrode assembly (100, 100A, 100B, 100C) and a lower plate (215), the lower plate (215) sealing a lower portion of the side plate (210), and a cap assembly (300) coupled to an upper portion of the case (200) and electrically connected to the positive electrode plate (110), the negative electrode uncoated portion (124, 125, 224, 225, 324, 325, 424, 425) including a negative electrode extension uncoated portion (126, 226, 326, 426) of which one end portion is folded, extends downward from the electrode assembly (100, 100A, 100B, 100C), and is connected to the lower plate (215) of the case (200).

## Description

### BACKGROUND

### 1. Field

A secondary battery is disclosed.

### 2. Description of the Related Art

Secondary battery are batteries that are chargeable and dischargeable, unlike primary batteries that are not chargeable. Low-capacity secondary batteries are used in portable small-sized electronic devices such as smartphones, feature phones, notebook computers, digital cameras, and camcorders, and large-capacity secondary batteries are widely used as power storage batteries and power sources for driving motors for hybrid vehicles, electric vehicles, and the like. Such lithium ion secondary batteries may be classified into cylindrical, prismatic, and pouch-type secondary batteries in terms of shape.

### SUMMARY

Embodiments are directed to a secondary battery, including an electrode assembly including a positive electrode plate having a positive electrode uncoated portion, a negative electrode plate having a negative electrode uncoated portion, and a separator between the positive electrode plate and the negative electrode plate, a case including a side plate with a cylindrical body, the case accommodating the electrode assembly and a lower plate, the lower plate sealing a lower portion of the side plate, and a cap assembly coupled to an upper portion of the case and electrically connected to the positive electrode plate, the negative electrode uncoated portion including a negative electrode extension uncoated portion of which one end portion is folded, extends downward from the electrode assembly, and is connected to the lower plate of the case.

The negative electrode extension uncoated portion may include an overlapping portion folded to an outer surface or an inner surface of the negative electrode uncoated portion and in contact with the outer surface or the inner surface of the negative electrode uncoated portion, and may include a protrusion which protrudes downward from the electrode assembly.

A first width of the protrusion may be equal to a second width of the negative electrode plate.

A first width of the protrusion may be less than a diameter of the electrode assembly.

A length of the protrusion may be greater than half of a diameter of the electrode assembly and less than the diameter of the electrode assembly.

The overlapping portion may be in contact with the side plate of the case.

The separator may cover the overlapping portion and may be in contact with the side plate of the case.

The negative electrode uncoated portion may include a negative electrode front uncoated portion positioned at a winding front portion and a negative electrode finish uncoated portion positioned at a winding finish portion, and the negative electrode extension uncoated portion may be formed in the negative electrode finish uncoated portion.

The negative electrode extension uncoated portion may be folded along a folding line connecting an upper end and a lower end of the negative electrode uncoated portion, and a first angle formed between the folding line and the lower end of the negative electrode uncoated portion may be an acute angle.

The negative electrode extension uncoated portion may be further folded at least once along a folding line perpendicular to a length direction of the negative electrode uncoated portion.

Embodiments are directed to a secondary battery, including an electrode assembly including a positive electrode plate having a positive electrode uncoated portion, a negative electrode plate having a negative electrode uncoated portion, and a separator between the positive electrode plate and the negative electrode plate, a case including a side plate with a cylindrical body, the case accommodating the electrode assembly and a lower plate sealing a lower portion of the side plate, and a cap assembly coupled to an upper portion of the case and electrically connected to the positive electrode plate, the negative electrode uncoated portion including a negative electrode extension uncoated portion, and a portion of the negative electrode uncoated portion being cut along a perforated line, folded along a folding line, and extending downward from the electrode assembly and connected to the lower plate of the case.

A first width of the negative electrode plate being greater than a diameter of the electrode assembly.

The perforated line may be parallel to a length direction of the negative electrode plate, the folding line may connect the perforated line and a lower end of the negative electrode plate, and a first angle being formed between the folding line and the lower end of the negative electrode plate may be an acute angle.

The perforated line may be perpendicular to a length direction of the negative electrode plate, and the folding line may be parallel to the length direction of the negative electrode plate.

The negative electrode extension uncoated portion may include an overlapping portion being folded to an outer surface or an inner surface of the negative electrode uncoated portion and in contact with the outer surface or the inner surface of the negative electrode uncoated portion, and may include a protrusion which protrudes downward from the electrode assembly.

Embodiments are directed to a secondary battery, including an electrode assembly including a positive electrode plate having a positive electrode uncoated portion, a negative electrode plate having a negative electrode uncoated portion, and a separator between the positive electrode plate and the negative electrode plate, a cap assembly coupled to an upper portion of a case and electrically connected to the positive electrode plate, the negative electrode uncoated portion including a negative electrode extension uncoated portion of which one end portion is folded, and extends downward from the electrode assembly.

The negative electrode extension uncoated portion may include an overlapping portion folded to an outer surface or an inner surface of the negative electrode uncoated portion and in contact with the outer surface or the inner surface of the negative electrode uncoated portion, and may include a protrusion which protrudes downward from the electrode assembly.

A first width of the protrusion may be equal to a second width of the negative electrode plate.

A first width of the protrusion may be less than a diameter of the electrode assembly.

A length of the protrusion may be greater than half of a diameter of the electrode assembly and less than the diameter of the electrode assembly.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

Features will become apparent to those of skill in the art by describing in detail exemplary embodiments with reference to the attached drawings in which:
FIG. 1 is a cross-sectional view showing a secondary battery.
FIG. 2A is a plan view showing a state before an electrode assembly of FIG. 1 is wound.
FIGS. 2B and 2C are plan views showing a negative electrode plate of FIG. 2A.
FIG. 3 is a perspective view showing a wound electrode assembly.
FIGS. 4A to 4C are perspective views showing electrode assemblies.
FIGS. 5A to 5C are perspective views showing steps in a process of inserting the electrode assembly into a case.
FIGS. 6A and 6B are plan views showing a negative electrode plate of an electrode assembly.
FIGS. 7A and 7B are perspective views showing a state in which the electrode assembly including the negative electrode plate of FIGS. 6A and 6B is wound.
FIGS. 8A and 8B are plan views showing a negative electrode plate of an electrode assembly.
FIGS. 9A and 9B are perspective views showing a state in which the electrode assembly including the negative electrode plate of FIGS. 8A and 8B is wound.
FIGS. 10A to 10C are plan views showing a negative electrode plate of an electrode assembly.
FIGS. 11A to 11D are perspective views showing a state in which the electrode assembly including the negative electrode plate of FIGS. 10A to 10C is wound.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In addition, in the present specification, it will be understood that, when a member A is referred to as being "connected to" a member B, the member A may be directly connected to the member B or an intervening member C may be present therebetween such that the member A and the member B are indirectly connected to each other.

The terminology used herein is for the purpose of describing particular embodiments only and is not intended to limit the present disclosure. As used herein, the singular forms are intended to include the plural forms as well, unless the context clearly indicates otherwise. It will be further understood that the terms "comprise or include" and/or "comprising or including," when used in this specification, specify the presence of stated shapes, numbers, steps, operations, members, elements, and/or groups thereof but do not preclude the presence or addition of one or more other shapes, numbers, steps, operations, members, elements, and/or groups thereof.

It is apparent that, although the terms "first," "second," and the like are used herein to describe various members, parts, regions, layers, and/or portions, these members, parts, regions, layers, and/or portions are not limited by these terms. These terms are only used to distinguish one member, part, region, layer, or portion from another member, part, region, layer, or portion. Accordingly, a first member, part, region, layer, or a portion which will be described below may indicate a second member, part, region, layer, or portion without deviating from teachings of the present disclosure.

Spatially relative terms, such as "beneath," "below," "lower," "above," "upper," "upward," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" can encompass both an orientation of above and below.

Embodiments of the present disclosure will be described in detail with reference to accompanying drawings such that those skilled in the art can fully understand and carry out the present disclosure.

The same reference numerals are assigned to the same elements throughout the drawings. In the specification, when an element is referred to as being "electrically coupled" to another element, it can be directly connected or coupled to the another element or be indirectly connected or coupled to the another element with one or more intervening elements interposed therebetween.

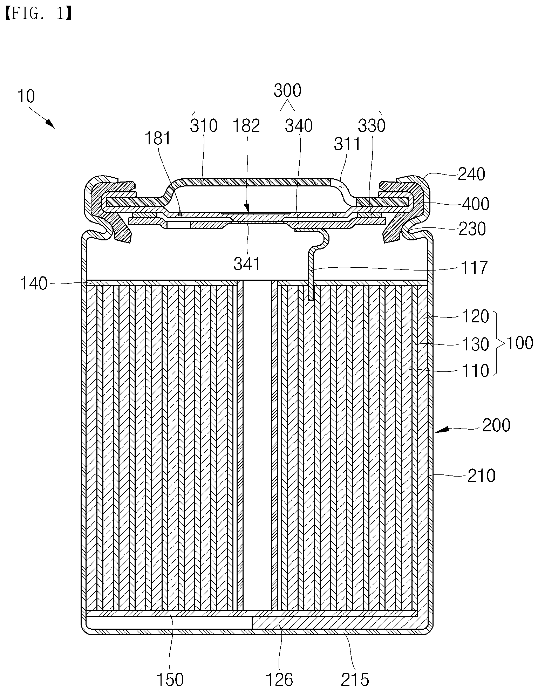

FIG. 1 is a cross-sectional view showing a secondary battery. Referring to FIG. 1, a secondary battery 10 according to the embodiment of the present disclosure may include an electrode assembly 100, a case 200, a cap assembly 300, and a gasket 400.

The electrode assembly 100 may include a positive electrode plate 110, a negative electrode plate 120, and a separator 130 interposed between the positive electrode plate 110 and the negative electrode plate 120. The electrode assembly 100 may be formed by winding a stack of the positive electrode plate 110, the separator 130, and the negative electrode plate 120 in a jelly-roll shape. In addition, an upper insulating plate 140 may be on the electrode assembly 100, and a lower insulating plate 150 may be below the electrode assembly 100. In some examples, the upper insulating plate 140 may insulate the negative electrode plate 120 from the cap assembly 300, and the lower insulating plate 150 may insulate the positive electrode plate 110 from the case 200.

The case 200 may include a side plate 210 which may be a cylindrical body having a diameter with a space in which the electrode assembly 100 is accommodated is formed therein and a lower plate 215 which seals a lower portion of the side plate 210. An upper opening of the case 200 may be open such that the electrode assembly 100 may be inserted and then sealed. The cap assembly 300 may be coupled to the upper opening of the case 200. In some examples, at an upper portion of the case 200, a beading part 230 may prevent the electrode assembly 100 from moving, and a crimping part 240 may fix the cap assembly 300 and the gasket 400. The crimping part 240 may be formed such that the gasket 400 is inside the crimping part 240 to press the cap assembly 300, thereby serving to prevent separation of the cap assembly 300 and the leakage of an electrolyte. The case 200 may be electrically connected to the negative electrode plate 120.

The cap assembly 300 may be electrically connected to the positive electrode plate 110 of the electrode assembly 100. The cap assembly 300 may be coupled to the upper portion of the case 200 and may be electrically insulated from the case 200 by the gasket 400. The cap assembly 300 may include a cap-up 310, a safety vent 182, an insulator 330, and a cap-down 340.

The cap-up 310 may be a circular plate body, and a central portion thereof may convexly protrude upward. The cap-up 310 may be electrically connected to the positive electrode plate 110 to serve as a positive electrode. In addition, a gas discharge hole 311 through which gas generated in the case 200 may be discharged may be formed in the cap-up 310.

The safety vent 182 may be a circular plate body corresponding to the cap-up 310 and may be coupled to a lower portion of the cap-up 310. An edge of the safety vent 182 may extend above the cap-up 310. The safety vent 182 may include a notch 181 that may be fractured when pressure inside the case 200 is greater than or equal to a reference pressure. The insulator 330 may be between the safety vent 182 and the cap-down 340 to insulate the safety vent 182 from the cap-down 340.

The cap-down 340 may include a connection portion 341 coupled to a lower portion of the safety vent 182 and electrically connected to the safety vent 182. The connection portion 341 may be at a central portion of the cap-down 340 and may have a relatively thin thickness. In an implementation the thickness of the connection portion 341 may be less than the thickness of the safety vent 182, or the cap-up 310. The connection portion 341 may be separated from the cap-down 340 by gas generated in the case 200. A positive electrode tab 117 of the positive electrode plate 110 may be electrically connected to a lower surface of the cap-down 340. In an implementation, the cap assembly may include a cap plate and an electrode terminal having a rivet shape which passes through the cap plate and is electrically connected to the first electrode plate.

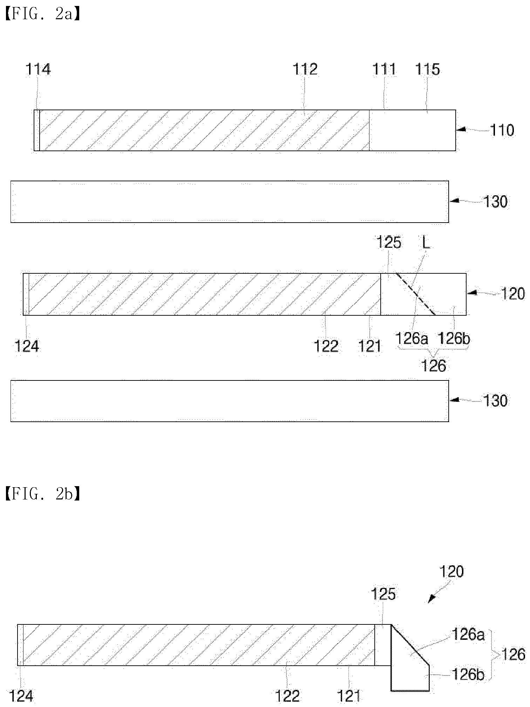

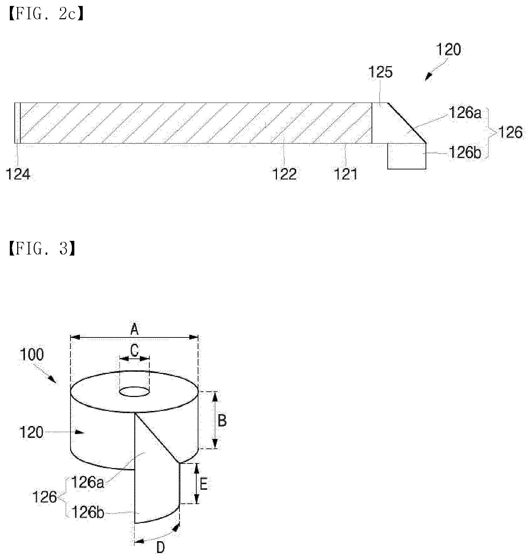

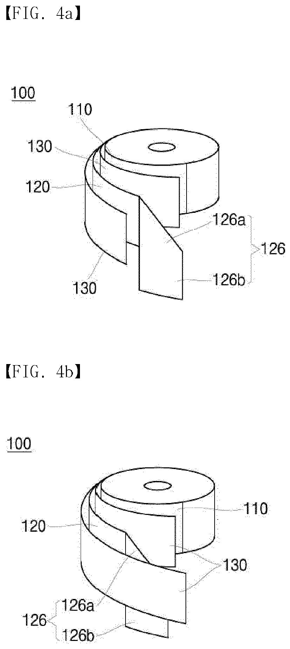

FIG. 2A is a plan view showing a state before an electrode assembly of FIG. 1 is wound. FIGS. 2B and 2C are plan views showing a negative electrode plate of FIG. 2A. FIG. 3 is a perspective view showing a wound electrode assembly. FIGS. 4A to 4C are perspective views showing electrode assemblies.

Referring to FIGS. 2A and 2B, the electrode assembly 100 may include the positive electrode plate 110, the negative electrode plate 120, and the separator 130 between the positive electrode plate 110 and the negative electrode plate 120. The positive electrode plate 110 may include positive electrode active material layers 112 coated on both surfaces of a positive electrode collector plate 111 provided as a thin metal plate having high conductivity, e.g., an aluminum foil or mesh. The positive electrode active material layer 112 may be formed using a material in which a conductive material such as carbon black or graphite powder and a binder for fixing an active material are mixed into a positive electrode active material. Here, as the positive electrode active material, a chalcogenide compound may be used, and for example, a composite metal oxide such as LiCoO₂, LiMn₂O₄, LiNiO₂, or LiNiMnO₂ may be used. As used herein, the term "or" is not an exclusive term, e.g., "A or B" would include A, B, or A and B.

In the positive electrode collector plate 111, positive electrode uncoated portions 114 and 115 on which a positive electrode active material layer is not formed may be formed at both end portions (that is, a front end portion and a finish end portion) of the positive electrode collector plate 131. The positive electrode uncoated portions 114 and 115 may include a positive electrode front uncoated portion 114 positioned at a winding front portion and a positive electrode finish uncoated portion 115 positioned at a winding finish portion. For example, the positive electrode front uncoated portion 114 may be shorter than the positive electrode finish uncoated portion 115.

The positive electrode tab 117 may be connected (e.g., welded) to the positive electrode uncoated portions 114 and 115. In an implementation, one end of the positive electrode tab 117 may be electrically connected to the positive electrode uncoated portions 114 and 115, and the other end thereof may protrude and extend to the outside. Referring to FIG. 1, the positive electrode tab 117 may be electrically connected to the cap-down 340 of the cap assembly 300. In some examples, a separate positive electrode tab may not be attached to the positive electrode uncoated portions 114 and 115, and the positive electrode uncoated portions 114 and 115 may be electrically connected directly to the cap-down 340. For example, the positive electrode front uncoated portion 114 or the positive electrode finish uncoated portion 115 may be bent or folded to protrude upward from the electrode assembly 100, and a protruding portion may be electrically connected to the cap-down 340.

The negative electrode plate 120 may include negative electrode active material layers 122 coated on both surfaces of a negative electrode collector plate 121 provided as a conductive thin metal plate, e.g., a copper or nickel foil or mesh. The negative electrode active material layer 122 may be formed using a material in which a conductive material such as carbon black or graphite powder and a binder for fixing an active material are mixed into a negative electrode active material. Here, as the negative electrode active material, a carbon-based material, silicon (Si), tin (Sn), tin oxide, a tin alloy composite, a transition metal oxide, a lithium metal nitrite, or a metal oxide may be used.

In the negative electrode collector plate 121, negative electrode uncoated portions 124 and 125 on which a negative electrode active material layer is not formed may be formed at both end portions (that is, a front end portion and a finish end portion) of the negative electrode collector plate 121. The negative electrode uncoated portions 124 and 125 may include a negative electrode front uncoated portion 124 positioned at a winding front portion and a negative electrode finish uncoated portion 125 positioned at a winding finish portion.

The negative electrode finish uncoated portion 125 may include a negative electrode extension uncoated portion 126 bent or folded along a folding line L to extend downward. Here, the folding line L may be an oblique line, and an angle formed between a lower end of the negative electrode uncoated portion 124 or 125 and the folding line L may be an acute angle. In addition, the folding line L may be a line connecting a front end and the lower end of the negative electrode uncoated portion 124 or 125. The negative electrode extension uncoated portion 126 may be bent or folded to an outer surface of the negative electrode plate 120. The negative electrode extension uncoated portion 126 may include an overlapping portion 126a and a protrusion 126b. The overlapping portion 126a may be a portion of the negative electrode finish uncoated portion 125 that is in contact with an outer surface of the negative electrode finish uncoated portion 125 in a folded position, and the protrusion 126b may be a portion protruding downward from the negative electrode finish uncoated portion 125. That is, the protrusion 126b may protrude downward from the electrode assembly 100. The overlapping portion 126a may be in contact with the outer surface of the negative electrode finish uncoated portion 125.

In some examples, referring to FIG. 2C, the negative electrode extension uncoated portion 126 may be bent or folded to an inner surface of the negative electrode plate 120. Thus, the overlapping portion 126a may be in contact with the inner surface of the negative electrode finish uncoated portion 125.

Referring to FIG. 3, a width D of the protrusion 126b may be equal to a width B of the negative electrode plate 120. The width D of the protrusion 126b may be greater than a diameter C of a winding core (inner hollow) of the electrode assembly 100 and may be less than a diameter A of the electrode assembly 100 (C<D<A). In addition, a length E of the protrusion 126b protruding downward from the electrode assembly 100 may be greater than 1/2 of the diameter A of the electrode assembly 100 and may be less than the diameter A of the electrode assembly 100 (A/2<E<A).

As described above, in the secondary battery 10, the negative electrode uncoated portions 124 and 125 may be folded and electrically connected to the case 200, thereby reducing internal resistance and improving current collection efficiency.

In addition, since the secondary battery 10 may not require a separate negative electrode tab, and cracks or deformation of a portion at which a negative electrode tab and the negative electrode plate 120 are welded may be prevented, thereby improving the reliability of the secondary battery 10. In addition, since the secondary battery 10 may not require a separate negative electrode tab, corresponding costs can be reduced. As such, the negative electrode extension uncoated portion 126 may be formed in the negative electrode finish uncoated portion 125, but the negative electrode extension uncoated portion 126 may also be formed in the negative electrode front uncoated portion 124.

In addition, a positive electrode extension uncoated portion having the same shape as the negative electrode extension uncoated portion 126 may also be formed in the positive electrode uncoated portions 114 and 115 of the positive electrode plate 110, and in this case, the positive electrode extension uncoated portion may protrude upward from the electrode assembly 100 to be in contact with an upper surface of the electrode assembly 100. Since the shape of the positive electrode extension uncoated portion is the same as that of the negative electrode extension uncoated portion 126, redundant descriptions will be omitted.

Referring to FIG. 4A, the separator 130 may be positioned at an outermost side of the electrode assembly 100, and the negative electrode extension uncoated portion 126 may be exposed from the separator 130. In other words, the separator 130 may not cover the negative electrode extension uncoated portion 126. In some examples, the negative electrode extension uncoated portion 126 exposed at an outer surface of the electrode assembly 100 may be in contact with the side plate 210 of the case 200, and the case 200 may serve as a negative electrode. Referring to FIG. 4B, the separator 130 may be positioned at the outermost side of the electrode assembly 100, and the negative electrode extension uncoated portion 126 may be covered by the separator 130.

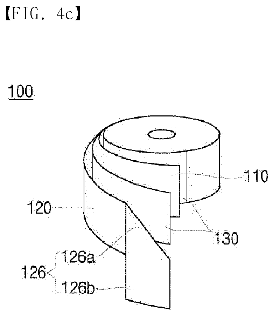

Referring to FIG. 4C, the negative electrode plate 120 may be positioned at the outermost side of the electrode assembly 100, and the negative electrode extension uncoated portion 126 may be in contact with the side plate 210 and the lower plate 215 of the case 200 so that the case 200 may serve as a negative electrode. The negative electrode active material layer 122 may not be formed on an outer surface of the negative electrode plate 120 at the last turn of winding which is positioned at the outermost side of the electrode assembly 100 and exposed to the outside. In some cases, the negative electrode active material layer 122 may not be formed even on an inner surface of the negative electrode plate 120 at the last turn of winding.

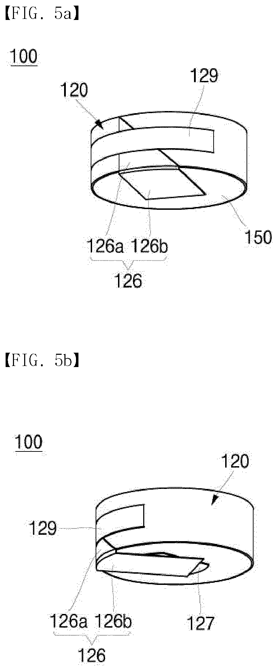

FIGS. 5A to 5C are perspective views showing steps in a process of inserting the electrode assembly into a case. Referring to FIG. 5A, the protrusion 126b of the negative electrode extension uncoated portion 126 may be bent to be in contact with a lower surface of the electrode assembly 100. In some examples, the protrusion 126b may be in contact with the lower insulating plate 150 positioned below the electrode assembly 100. The protrusion 126b may serve as a negative electrode tab. In some examples, the negative electrode plate 120 may be fixed with an adhesive member 129. For example, the adhesive member 129 may be referred to as a finishing tape.

In some examples, referring to FIG. 5B, the protrusion 126b of the negative electrode extension uncoated portion 126 may be bent and electrically connected to a separate negative electrode tab 127. Here, the negative electrode tab 127 may be attached to the negative electrode front uncoated portion 124 and may protrude downward from the electrode assembly 100. In some examples, the negative electrode tab 127 may be formed by folding the negative electrode front uncoated portion 124 and may be a portion of the negative electrode front uncoated portion 124. The negative electrode tab 127 may be bent and electrically connected (e.g., welded) to the protrusion 126b extending to the lower surface of the electrode assembly 100.

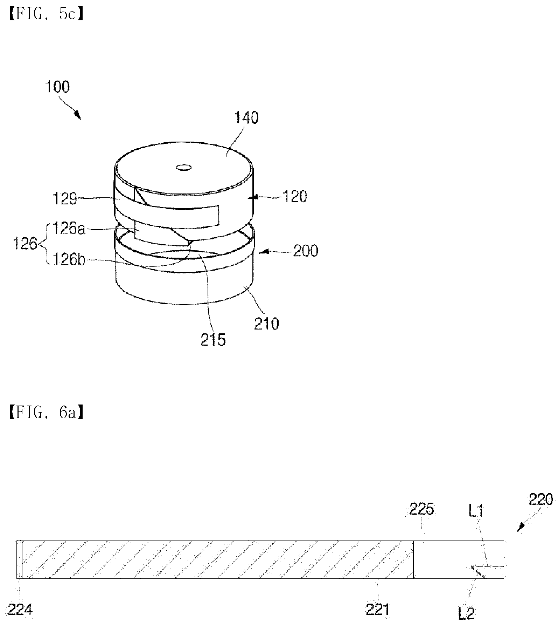

Next, referring to FIG. 5C, the electrode assembly 100 may be accommodated in the case 200. In some examples, the upper insulating plate 140 may be coupled to the upper surface of the electrode assembly 100, and the lower insulating plate 150 may be coupled to the lower surface of the electrode assembly 100. The protrusion 126b of the negative electrode extension uncoated portion 126 extending to the lower surface of the electrode assembly 100 may be in contact with and electrically connected (e.g., welded) to the lower plate 215 of the case 200. In addition, the overlapping portion 126a of the negative electrode plate 120 may be in contact with the side plate 210 of the case 200. In this case, a portion of the overlapping portion 126a excluding a portion to which the adhesive member 129 is attached may be substantially in contact with the side plate 210 of the case 200.

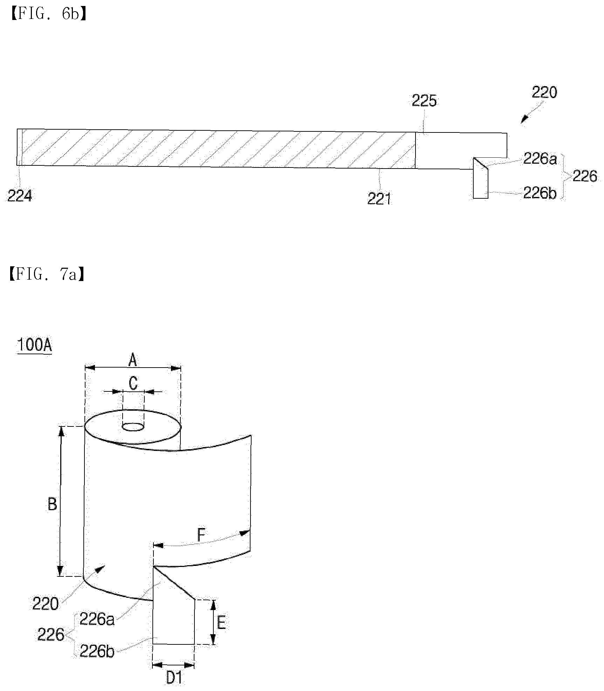

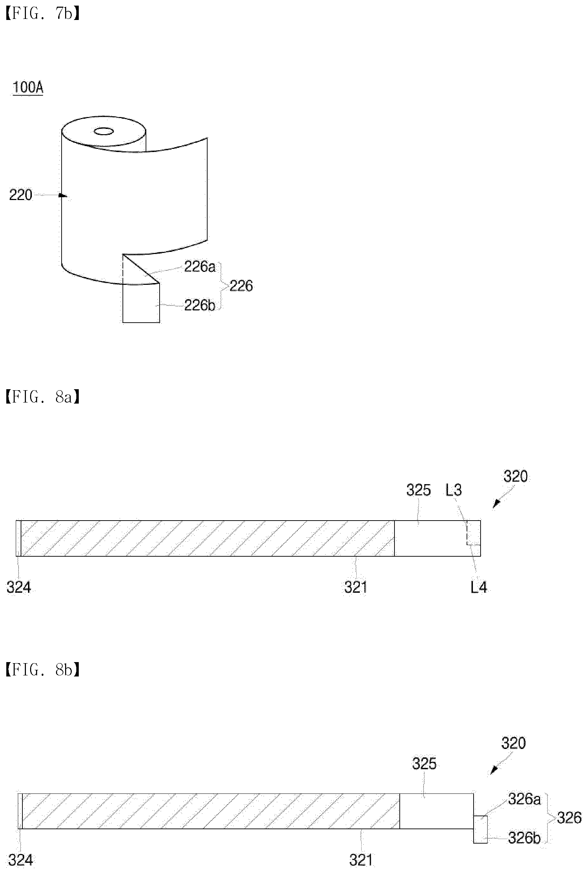

FIGS. 6A and 6B are plan views showing a negative electrode plate of an electrode assembly. FIGS. 7A and 7B are perspective views showing a state in which the electrode assembly including the negative electrode plate of FIGS. 6A and 6B is wound.

Referring to FIG. 6A, in a negative electrode collector plate 221, negative electrode uncoated portions 224 and 225 on which a negative electrode active material layer is not formed may be formed at both end portions (that is, a front end portion and a finish end portion) of the negative electrode collector plate 221. The negative electrode uncoated portions 224 and 225 may include a negative electrode front uncoated portion 224 positioned at a winding front portion and a negative electrode finish uncoated portion 225 positioned at a winding finish portion.

Referring to FIG. 6B, the negative electrode finish uncoated portion 225 may include a negative electrode extension uncoated portion 226 which is formed by cutting a portion of the negative electrode finish uncoated portion 225 along a perforated line L1, and then bending or folding a portion positioned below the perforated line L1 along a folding line L2 so as to extend downward. Here, the perforated line L1 may be parallel to a length direction of a negative electrode plate 220. The negative electrode extension uncoated portion 226 may be bent or folded to an outer surface of the negative electrode plate 220. The negative electrode extension uncoated portion 226 may include an overlapping portion 226a and a protrusion 226b. The overlapping portion 226a may be a portion of the negative electrode finish uncoated portion 225 that is in contact with the negative electrode finish uncoated portion 225 in a folded position, and the protrusion 226b is a portion protruding downward from the negative electrode finish uncoated portion 225. The overlapping portion 226a is in contact with an outer surface of the negative electrode finish uncoated portion 225.

Referring to FIG. 7A, a width B of the negative electrode plate 220 may be greater than a diameter A of the electrode assembly 100A. In this case, since it is inefficient to directly fold the negative electrode finish uncoated portion 225, a portion of the negative electrode finish uncoated portion 225 may be cut along the perforated line L1 and then folded to form the negative electrode extension uncoated portion 226.

A width D1 of the protrusion 226b cut along the perforated line L1 may be less than the width B of the negative electrode plate 220. The width D1 of the protrusion 226b may be greater than a diameter C of a winding core (inner hollow) of the electrode assembly 100A and may be less than the diameter A of the electrode assembly 100A (C<D1<A). In addition, a length E of the protrusion 226b protruding downward from the electrode assembly 100A may be greater than 1/2 of the diameter A of the electrode assembly 100A and may be less than the diameter A of the electrode assembly 100A (A/2<E<A). In addition, a length F of the perforated line L1 may be greater than the length E of the protrusion 226b protruding downward from the electrode assembly 100A. The length F of the perforated line L1 may be less than a length of the negative electrode finish uncoated portion 225.

In some examples, referring to FIG. 7B, the negative electrode extension uncoated portion 226 may be bent or folded to an inner surface of the negative electrode plate 220. Thus, the overlapping portion 226a may be in contact with an inner surface of the negative electrode finish uncoated portion 225.

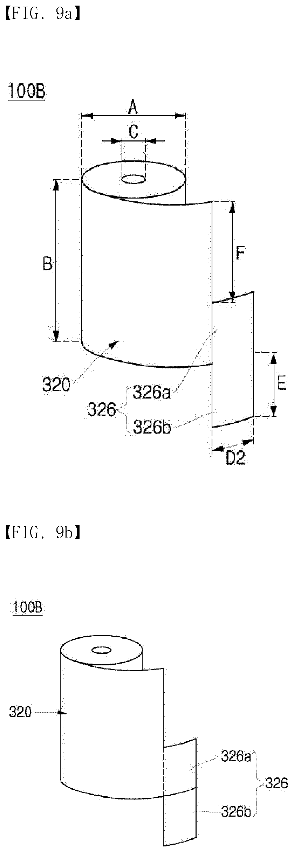

FIGS. 8A and 8B are plan views showing a negative electrode plate of an electrode assembly. FIGS. 9A and 9B are perspective views showing a state in which the electrode assembly including the negative electrode plate of FIGS. 8A and 8B is wound.

Referring to FIG. 8A, in a negative electrode collector plate 321, negative electrode uncoated portions 324 and 325 on which a negative electrode active material layer is not formed may be formed at both end portions (that is, a front end portion and a finish end portion) of the negative electrode collector plate 321. The negative electrode uncoated portions 324 and 325 may include a negative electrode front uncoated portion 324 positioned at a winding front portion and a negative electrode finish uncoated portion 325 positioned at a winding finish portion.

Referring to FIG. 8B, the negative electrode finish uncoated portion 325 may include a negative electrode extension uncoated portion 326 which may be formed by cutting a portion of the negative electrode finish uncoated portion 325 along a perforated line L3, and then bending or folding a portion positioned outside (right side in the drawing) the perforated line L3 along a folding line L4 so as to extend downward. Here, the perforated line L3 may be perpendicular to a length direction of a negative electrode plate 320. In addition, the folding line L4 may be parallel to the length direction of the negative electrode plate 320 and perpendicular to the perforated line L3. The negative electrode extension uncoated portion 326 may be bent or folded to an outer surface of the negative electrode plate 320. The negative electrode extension uncoated portion 326 may include an overlapping portion 326a and a protrusion 326b. The overlapping portion 326a may be a portion of the negative electrode finish uncoated portion 325 that is in contact with the negative electrode finish uncoated portion 325 in a folded position, and the protrusion 326b is a portion protruding downward from the negative electrode finish uncoated portion 325. The overlapping portion 326a may be in contact with an outer surface of the negative electrode finish uncoated portion 325.

Referring to FIG. 9A, a width D2 of the protrusion 326b cut along the perforated line L3 may be less than a width B of the negative electrode plate 320. The width D2 of the protrusion 326b may be greater than a diameter C of a winding core (inner hollow) of an electrode assembly 100B and may be less than a diameter A of the electrode assembly 100B (C<D2<A). In addition, a length E of the protrusion 326b protruding downward from the electrode assembly 100B may be greater than 1/2 of the diameter A of the electrode assembly 100B and may be less than the diameter A of the electrode assembly 100B (A/2<E<A). In addition, a length F of the perforated line L3 may be greater than the length E of the protrusion 326b protruding downward from the electrode assembly 100B and may be less than the width B of the negative electrode plate 320.

In some examples, referring to FIG. 9B, the negative electrode extension uncoated portion 326 may be bent or folded to an inner surface of the negative electrode plate 320. Thus, the overlapping portion 326a may be in contact with an inner surface of the negative electrode finish uncoated portion 325.

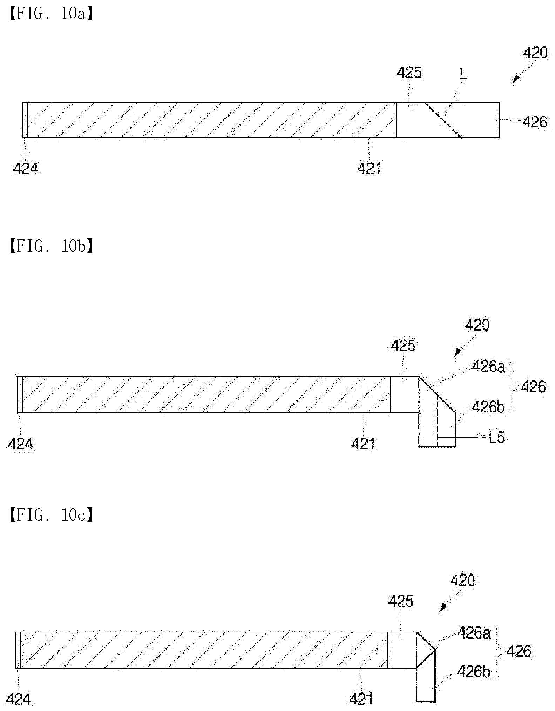

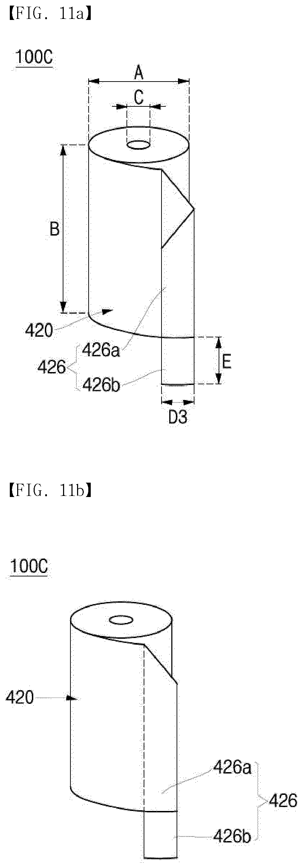

FIGS. 10A to 10C are plan views showing a negative electrode plate of an electrode assembly. FIGS. 11A to 11D are perspective views showing a state in which the electrode assembly including the negative electrode plate of FIGS. 10A to 10C is wound.

Referring to FIG. 10A, in a negative electrode collector plate 421, negative electrode uncoated portions 424 and 425 on which a negative electrode active material layer is not formed may be formed at both end portions (that is, a front end portion and a finish end portion) of the negative electrode collector plate 421. The negative electrode uncoated portions 424 and 425 may include a negative electrode front uncoated portion 424 positioned at a winding front portion and a negative electrode finish uncoated portion 425 positioned at a winding finish portion.

Referring to FIG. 10B, the negative electrode finish uncoated portion 425 may include a negative electrode extension uncoated portion 426 bent or folded along a first folding line L to extend downward. Here, the first folding line L may be an oblique line, and an angle formed between a lower end of the negative electrode uncoated portion 124 or 125 and the first folding line L may be an acute angle. The negative electrode extension uncoated portion 426 may be bent or folded to an outer surface of a negative electrode plate 420.

Next, referring to FIG. 10C, the negative electrode extension uncoated portion 426 may be bent or folded along a second folding line L5. Here, the second folding line L5 may be perpendicular to a length direction of the negative electrode plate 420. Although the negative electrode extension uncoated portion is illustrated in FIG. 10C as being bent or folded once along the second folding line L5 perpendicular to the length direction of the negative electrode plate, the negative electrode extension uncoated portion 426 may be folded more than once.

Referring to FIG. 11A, a width D3 of a protrusion 426b bent or folded along the first folding line L and the second folding line L5 may be greater than a diameter C of a winding core (inner hollow) of an electrode assembly 100C and may be less than a diameter A of the electrode assembly 100C (C<D3<A). In addition, a length E of the protrusion 426b protruding downward from the electrode assembly 100C may be greater than 1/2 of the diameter A of the electrode assembly 100C and may be less than the diameter A of the electrode assembly 100C (A/2<E<A).

In some examples, referring to FIG. 11B, the negative electrode extension uncoated portion 426 may be bent or folded to an inner surface of the negative electrode plate 420. Thus, an overlapping portion 426a may be in contact with an inner surface of the negative electrode finish uncoated portion 425.

In a secondary battery according to embodiments of the present disclosure, a negative electrode uncoated portion may be folded and electrically connected to a case, thereby reducing internal resistance and improving current collection efficiency.

By way of summation and review, a cylindrical secondary battery may include an electrode assembly having a cylindrical shape, a case having a cylindrical shape to which the electrode assembly is coupled, and a cap assembly coupled to one side of the case to prevent the electrode assembly from being separated. A positive electrode tab and a negative electrode tab may be attached to the electrode assembly so that the positive electrode tab may be connected to the cap assembly and the negative electrode tab may be connected to the case. A secondary battery in which internal resistance may be reduced, and current collection efficiency may be increased is disclosed.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (10), comprising:
an electrode assembly (100, 100A, 100B, 100C) including:
a positive electrode plate (110) having a positive electrode uncoated portion (114, 115),
a negative electrode plate (120, 220, 320, 420) having a negative electrode uncoated portion (124, 125; 224, 225; 324, 325; 424, 425), the negative electrode uncoated portion (124, 125; 224, 225; 324, 325; 424, 425) including a negative electrode extension uncoated portion (126, 226, 326, 426) of which one end portion is folded and extending downward from the electrode assembly (100, 100A, 100B, 100C), and
a separator (130) between the positive electrode plate (110) and the negative electrode plate (120, 220, 320, 420);
a case (200) including a side plate (210) with a cylindrical body, the case (200) accommodating the electrode assembly (100, 100A, 100B, 100C) and a lower plate (215), the lower plate (215) sealing a lower portion of the side plate (210) and the negative electrode uncoated portion (124, 125; 224, 225; 324, 325; 424, 425) being connected to the lower plate (215) of the case (200); and
a cap assembly (300) coupled to an upper portion of the case (200) and electrically connected to the positive electrode plate (110).

2. The secondary battery (10) as claimed in claim 1, wherein the negative electrode extension uncoated portion (126, 226, 326, 426) includes:
an overlapping portion (126a, 226a, 326a, 426a) folded to an outer surface or an inner surface of the negative electrode uncoated portion (124, 125; 224, 225; 324, 325; 424, 425) and in contact with the outer surface or the inner surface of the negative electrode uncoated portion (124, 125; 224, 225; 324, 325; 424, 425); and
a protrusion (126b, 226b, 326b, 426b) which protrudes downward from the electrode assembly (100, 100A, 100B, 100C).

3. The secondary battery (10) as claimed in claim 2, wherein a first width (D) of the protrusion (126b, 226b, 326b, 426b) is equal to a second width (B) of the negative electrode plate (120, 220, 320, 420).

4. The secondary battery (10) as claimed in claim 2, wherein a first width (D) of the protrusion (126b, 226b, 326b, 426b) is less than a diameter (A) of the electrode assembly (100, 100A, 100B, 100C).

5. The secondary battery (10) as claimed in claim 2, wherein a length (E) of the protrusion (126b, 226b, 326b, 426b) is greater than half of a diameter (A) of the electrode assembly (100, 100A, 100B, 100C) and less than the diameter (A) of the electrode assembly (100, 100A, 100B, 100C).

6. The secondary battery (10) as claimed in any one of claims 2 to 5, wherein the overlapping portion (126a, 226a, 326a, 426a) is in contact with the side plate (210) of the case (200).

7. The secondary battery (10) as claimed in any one of claims claim 2 to 6, wherein the separator (130) covers the overlapping portion (126a, 226a, 326a, 426a) and is in contact with the side plate (210) of the case (200).

8. The secondary battery (10) as claimed in any one of the preceding claims, wherein:
the negative electrode uncoated portion (124, 125; 224, 225; 324, 325; 424, 425) includes a negative electrode front uncoated portion (224, 324, 424) positioned at a winding front portion and a negative electrode finish uncoated portion (125, 225, 325, 425) positioned at a winding finish portion; and
the negative electrode extension uncoated portion (126, 226, 326, 426) is formed in the negative electrode finish uncoated portion (125, 225, 325, 425).

9. The secondary battery (10) as claimed in any one of the preceding claims, wherein:
the negative electrode extension uncoated portion (126, 226, 326, 426) is folded along a folding line (L) connecting an upper end and a lower end of the negative electrode uncoated portion (124, 125, 224, 225, 324, 325, 424, 425); and
a first angle formed between the folding line (L) and the lower end of the negative electrode uncoated portion (124, 125; 224, 225; 324, 325; 424, 425) is an acute angle.

10. The secondary battery (10) as claimed in claim 9, wherein the negative electrode extension uncoated portion (126, 226, 326, 426) is further folded at least once along a folding line (L5) perpendicular to a length direction of the negative electrode uncoated portion (124, 125; 224, 225; 324, 325; 424, 425).

11. The secondary battery (10) as claimed in claim 1, wherein a portion of the negative electrode uncoated portion (124, 125, 224, 225, 324, 325, 424, 425) is cut along a perforated line (L1, L3), folded along a folding line (L2, L4), and connected to the lower plate (215) of the case (200).

12. The secondary battery (10) as claimed in claim 11, wherein a first width (D) of the negative electrode plate (120, 220, 320, 420) is greater than a diameter (B) of the electrode assembly (100, 100A, 100B, 100C).

13. The secondary battery (10) as claimed in claim 11 or 12, wherein:
the perforated line (L1) is parallel to a length direction of the negative electrode plate (120, 220, 320, 420);
the folding line (L2) connects the perforated line (L1) and a lower end of the negative electrode plate (120, 220, 320, 420); and
a first angle formed between the folding line (L2) and the lower end of the negative electrode plate (120, 220, 320, 420) is an acute angle.

14. The secondary battery (10) as claimed in claim 11 or 12, wherein:
the perforated line (L3) is perpendicular to a length direction of the negative electrode plate (120, 220, 320, 420); and
the folding line (L4) is parallel to the length direction of the negative electrode plate (120, 220, 320, 420).

15. The secondary battery (10) as claimed in any one of claims 11 to 14, wherein the negative electrode extension uncoated portion (126, 226, 326, 426) includes:
an overlapping portion (126a, 226a, 326a, 426a) which is folded to an outer surface or an inner surface of the negative electrode uncoated portion (124, 125; 224, 225; 324, 325; 424, 425) and in contact with the outer surface or the inner surface of the negative electrode uncoated portion (124, 125; 224, 225; 324, 325; 424, 425); and
a protrusion (126b, 226b, 326b, 426b) which protrudes downward from the electrode assembly (100, 100A, 100B, 100C).
